# EUROPÄISCHE PATENTSCHRIFT

(11) **EP 4 242 581 B1**
(45) Veröffentlichungstag und Bekanntmachung des Hinweises auf die Patenterteilung: **23.07.2025**
(21) Anmeldenummer: 23156767.8
(22) Anmeldetag: 15.02.2023
(51) Int. Cl.: G01B 11/06, G01B 11/08, G01N 21/3581, G01N 21/88

(54) **TERAHERTZ-VORRICHTUNG UND VERFAHREN ZUM BESTIMMEN VON DIMENSIONSDATEN EINES OBJEKTS**
TERAHERTZ DEVICE AND METHOD FOR DETERMINING DIMENSION DATA OF AN OBJECT
DISPOSITIF ET PROCÉDÉ TERAHERTZ DE DÉTERMINATION DE DONNÉES DIMENSIONNELLES D'UN OBJET

(30) Priorität: 09.03.2022 DE 102022105479
(43) Veröffentlichungstag der Anmeldung: 13.09.2023
(73) Patentinhaber: SIKORA AG, 28307 Bremen (DE)
(72) Erfinder: Schuh, Kolja Tobias, 28307 Bremen (DE); Bolte, Hilmar, 28717 Bremen (DE)
(74) Vertreter: Hauck Patent- und Rechtsanwälte PartmbB

(56) Entgegenhaltungen:
- DE-A1- 102016 202 530
- DE-A1- 102017 125 753
- DE-A1- 102020 120 545
- DE-U1- 202016 008 526

## Beschreibung

Die Erfindung betrifft ein Verfahren zum Bestimmen von Dimensionsdaten, insbesondere Dickendaten, eines plattenförmigen Objekts oder eines strangförmigen Objekts, insbesondere eines Rohrs, umfassend die Schritte:von Anspruch 1.

Die Erfindung betrifft außerdem eine Vorrichtung zum Bestimmen von Dimensionsdaten eines platten- oder strangförmigen Objekts, wie in Anspruch 9 beansprucht.

Mit Terahertzstrahlung, sogenannten Millimeterwellen, können Dimensionsdaten von plattenförmigen oder strangförmigen Objekten, zum Beispiel Rohren, gemessen werden. Zu solchen Dimensionsdaten zählen zum Beispiel Durchmesser oder Dicken, insbesondere Wanddicken. Von einem Sender wird ein Terahertzstrahlungssignal auf das zu vermessende Objekt ausgesendet. Das ausgesendete Strahlungssignal durchstrahlt das Objekt und wird an Grenzflächen des Objekts reflektiert. Anschließend wird die Terahertzstrahlung von einem Empfänger empfangen. Durch das Objekt erfolgt eine Manipulation des Strahlungssignals, insbesondere durch Reflektion, Streuung, Absorption und Brechung. Die dadurch bewirkte Änderung des Terahertzstrahlungssignals erlaubt Rückschlüsse auf das Objekt, wobei insbesondere zur Bestimmung von Dimensionsdaten Reflektionen an Grenzschichten des Objekts ausgewertet werden. Außerdem verzögert das Objekt das Terahertzstrahlungssignal aufgrund seiner höheren Dichte gegenüber einer Ausbreitung in Luft, so dass bei bekannter Ausrichtung und bekanntem Brechungsindex des Materials Absolutwerte der Dimensionen des Objekts bestimmt werden können, indem die Verzögerung des Strahlungssignals gemessen wird. Dies gilt insbesondere bei plattenförmigen oder strangförmigen Objekten, wie Rohren.

Für die Auswertung von Reflektionen an Grenzschichten des Objekts ist allerdings eine Bandbreite der verwendeten Terahertzstrahlung notwendig, die eine Auflösung der einzelnen Grenzschicht erlaubt. Bei kleinen zu messenden Dimensionen, zum Beispiel geringen Wandstärken, stellt dies erhebliche Anforderungen an die Bandbreite der verwendeten Terahertzstrahlung. So entspricht die notwendige Bandbreite etwa der Lichtgeschwindigkeit geteilt durch das Zweifache des Produkts aus dem Brechungsindex und der aufzulösenden Struktur, zum Beispiel einem aufzulösenden Abstand von Grenzflächen. Je nach aufzulösender Strukturgröße kann dies Bandbreiten im Bereich von 100 GHz erfordern. Dies macht die für eine zuverlässige Messung kleiner Strukturen erforderlichen Terahertzsender und - empfänger aufwendig und kostenintensiv. Oftmals sind besondere Zulassungsverfahren erforderlich. Der Aufwand steigt weiter an, wenn mehrere solcher Sender und Empfänger vorgesehen werden, zum Beispiel um ein zu vermessendes Rohr herum angeordnet. Dies ist oftmals erwünscht, um das Objekt möglichst vollständig zu bestrahlen und damit zu vermessen.

Ein weiteres Problem stellen Störungen der Objektgeometrie dar, insbesondere Fehlstellen, wie Lunker, Dellen, Ausbeulungen oder dergleichen. Zur Detektion von Fehlstellen wird in DE 10 2016 105 599 A1 vorgeschlagen, Terahertzstrahlung auf Grenzflächen eines zu vermessenden Objekts unter einem nicht senkrechten Winkel einzustrahlen, so dass von dem Prüfobjekt ausgehende und zu einer Sende- und Empfangseinheit gerichtete Reflektionen lediglich an Fehlstellen des Objekts auftreten. Alternativ kann die Hauptreflektions-Strahlung auch durch eine Blende ausgeblendet werden, um Reflektionen von den Grenzflächen des Objekts messtechnisch auszuschließen.

In DE 20 2021 100 416 U1 wird zum Detektieren von Fehlstellen eines entlang einer Förderrichtung geförderten strangförmigen Produkts eine Vorrichtung mit einer Auswerteeinrichtung vorgeschlagen, die dazu ausgebildet ist, aus einer temporären Veränderung eines von mindestens einem Empfänger empfangenen Terahertzstrahlungssignals auf eine Fehlstelle des strangförmigen Produkts zu schließen.

Aus DE 10 2016 202 530 A1 sind eine Vorrichtung und ein Verfahren zur Analyse von Materialien in einem Materialstrom sowie eine Sortieranordnung bekannt. Dabei wird der Materialstrom mit elektromagnetischer Strahlung im Terahertz-Wellenlängenbereich bestrahlt und der durch den Materialstrom hindurch transmittierte Strahlungsanteil erfasst. Eine Transmissionsanordnung ist ausgebildet zum Erzeugen, Erfassen und Auswerten mehrerer unterschiedlicher Terahertz Frequenzbänder geringer Bandbreite und zum Auswerten einer Vielzahl schmaler Einzelspektren in jedem dieser Terahertz-Frequenzbänder.

DE 20 2016 008 526 U1 beschreibt eine Vorrichtung zum Messen des Durchmessers und/oder der Wanddicke eines Strangs, wobei Terahertzstrahlung von einem Sender auf einen durch die Vorrichtung geführten Strang geleitet wird und von dem Sender ausgesandte Terahertzstrahlung hinter dem Strang mittels eines Reflektors reflektiert und von einem Sender empfangen wird. Anhand der von dem mindestens einen Empfänger empfangenen Messsignale werden der Durchmesser und/oder die Wanddicke des Strangs bestimmt.

DE 10 2020 120 545 A1 beschreibt ein Terahertzmessverfahren zur Ermittlung einer Materialeigenschaft eines Objekts, bei dem ein Vermessen eines Objekts unter Aussenden eines Terahertzsendestrahls und Empfangen des Terahertzsendestrahls nach Durchstrahlen des Messobjekts sowie einer Detektion von Teilreflexionspeaks von Grenzflächen zu Teilreflexionszeitpunkten und eines Hauptreflexionspeaks eines Hauptreflektors zu einem Hauptreflexionszeitpunkt erfolgt. Ein Brechungsindex des Materials des Messobjekts wird durch einen Vergleich der Objektvermessung mit einer Leermessung ermittelt.

Aus DE 10 2017 125 753 A1 ist ein weiteres Terahertzmessverfahren zum Messen mindestens einer Wanddicke eines rohrförmigen Messobjekts bekannt, bei dem ein Terahertzhauptstrahl entlang einer ersten optischen Achse durch eine Symmetrieachse des Messobjekts ausgesandt und an der Außenfläche und der Innenfläche entlang der ersten optischen Achse reflektierte Terahertzstrahlung empfangen wird. Weiterhin wird ein Terahertzzusatzstrahl entlang einer zweiten optischen Achse, die gegenüber der ersten optischen Achse um einen Sensorwinkel verstellt ist und zumindest zeitweise nicht durch die Symmetrieachse verläuft, ausgesandt und der entlang der zweiten optischen Achse zurückreflektierte Terahertzzusatzstrahl detektiert. Ausgehend von dem erläuterten Stand der Technik liegt der Erfindung die Aufgabe zugrunde, ein Verfahren und eine Vorrichtung der eingangs genannten Art bereitzustellen, mit denen Dimensionsdaten eines plattenförmigen oder strangförmigen Objekts mit verringertem Aufwand zuverlässig und präzise ermittelt werden können.

Die Erfindung löst diese Aufgabe durch die unabhängigen Ansprüche 1 und 9.

Vorteilhafte Ausgestaltungen finden sich in den abhängigen Ansprüchen, der Beschreibung und den Figuren.

Bei dem erfindungsgemäß zu vermessenden Objekt kann es sich zum Beispiel um ein Kunststoff- oder ein Glasobjekt handeln. Es ist plattenförmig oder strangförmig ausgebildet, zum Beispiel rohrförmig. Das Objekt kann während der Messung durch die Vorrichtung mit den ersten und zweiten Sendern und Empfängern gefördert werden, ein strangförmiges Objekt insbesondere entlang seiner Längsachse. Hierzu kann die Vorrichtung eine Fördereinrichtung umfassen. Das Objekt kann aus einer Produktionsvorrichtung, wie einer Extrusionsvorrichtung, kommen. Es kann während der Messung noch eine hohe Temperatur besitzen. Es ist auch möglich, dass die Verfestigung des Objekts während der Messung noch nicht abgeschlossen ist. Das Objekt kann also insbesondere noch Schmelzeanteile aufweisen.

Erfindungsgemäß wird zum Vermessen des Objekts Terahertzstrahlung eingesetzt, sogenannte Millimeterwellen. Die Terahertzstrahlung kann zum Beispiel in einem Frequenzbereich von 10 GHz bis 3 THz liegen. Terahertzstrahlung eignet sich gut zur Vermessung von Objekten, zum Beispiel Kunststoffobjekten, in schwierigen Messumgebungen, wie in Produktionsanlagen, da Terahertzstrahlung weitgehend unempfindlich für Störungen durch zum Beispiel Wasserdampf ist. So werden zum Beispiel aus Extrusionsvorrichtungen kommende strangförmige Objekte durch Aufbringen einer Kühlflüssigkeit, zum Beispiel Wasser, abgekühlt. Dabei entsteht Wasserdampf.

Der Erfindung liegt der Gedanke zugrunde, eine kombinierte Vermessung des Objekts mit einem ersten Messsystem mit einem ersten Sender und ersten Empfänger einerseits und einem zweiten Messsystem mit einem zweiten Sender und zweiten Empfänger andererseits durchzuführen. Die Bandbreite der von dem ersten Sender ausgesendeten Terahertzstrahlung beträgt mehr als 10 % der Trägerfrequenz der Terahertzstrahlung. Der zweite Sender sendet Terahertzstrahlung mit einer Bandbreite von weniger als 5 % der Trägerfrequenz der Terahertzstrahlung zu mehreren Zeitpunkten und/oder auf mehrere Orte auf der Oberfläche des Objekts aus. Die Bandbreite der Terahertzstrahlung ist definiert als die Differenz aus unterer und oberer Grenzfrequenz der von dem Sender ausgesendeten Terahertzstrahlung. Die Grenzfrequenzen liegen oberhalb und unterhalb der Trägerfrequenz, insbesondere im gleichen Abstand zur Trägerfrequenz. Der erste Sender sendet dagegen Terahertzstrahlung mit einer größeren Bandbreite aus als der zweite Sender. Durch die größere Bandbreite können mit dem ersten Sender und dem ersten Empfänger bei bekanntem oder messtechnisch ermittelten Brechungsindex des Objekts Absolutwerte von Dimensionsdaten des Objekts ermittelt werden. Hierzu können in an sich bekannter Weise Reflektionen der Terahertzstrahlung an

Grenzschichten des Objekts ausgewertet werden, zum Beispiel anhand von Laufzeitmessungen. Erfindungsgemäß wird diese Messung kombiniert mit einer Messung mittels eines zweiten Senders, der zu mehreren Zeiten bzw. auf mehrere Orte auf der Oberfläche des Objekts Terahertzstrahlung mit einer geringen Bandbreite aussendet. Mit dem schmalbandigen zweiten Sender und zweiten Empfänger können insbesondere eine Verzögerung der Terahertzstrahlung beim Durchstrahlen des Objekts gemessen werden. Auf Grundlage eines Vergleichs der insbesondere zu unterschiedlichen Zeitpunkten ausgesendeten Strahlungssignale kann eine Dimension des Objekts, insbesondere eine Dimensionsänderung des Objekts, zum Beispiel eine Dickenänderung des Objekts, an der Messposition des zweiten Senders bzw. Empfängers erkannt werden. Dies kann zum Beispiel aus einer beim Durchstrahlen des Objekts durch das Objekt verursachten Phasenänderung der ausgesendeten Terahertzstrahlung des zweiten Senders erfolgen. So können Dickenfluktuationen erfasst werden. Bei einem plattenförmigen Objekt ergibt sich unmittelbar eine eindeutige Messung. Bei einem rohrförmigen Objekt liefert die Messung die Summe der Dickenfluktuationen beider durchstrahlter Rohrwände. In Kombination mit dem Messsystem aus erstem Sender und erstem Empfänger, das zum Beispiel seltener als das Messsystem aus zweitem Sender und zweitem Empfänger eine Messung durchführt und dabei zum Beispiel die absolute Dicke des Objekts misst, kann ein Absolutwert der ermittelten Dimension, insbesondere der ermittelten Dimensionsänderung, zum Beispiel Dickenänderung, an der Messposition des zweiten Senders bzw. Empfängers, also der von dem zweiten Sender bestrahlten Position auf dem Objekt, ermittelt werden. Auf Grundlage der absoluten Dickenmessung zum Beispiel eines Rohrs kann auch auf die Dickenfluktuation der einzelnen Rohrwände geschlossen werden.

In der Kombination der beiden Messsysteme lassen sich somit absolute Dimensionswerte, insbesondere Dimensionsänderungen, zum Beispiel Dickenänderungen, jederzeit zuverlässig ermitteln. Die erfindungsgemäße Kombination der Messsysteme bietet den Vorteil, dass das breitbandigere erste Messsystem nur gelegentlich, und an einigen Orten auf der Oberfläche des Objekts, eine absolute Dickenmessung durchführen muss, während mit dem zweiten Messsystem häufiger und an mehr Orten auf der Oberfläche des Objekts eine Messung erfolgen kann. Dennoch kann durch die beispielsweise im Wesentlichen vollständige Erfassung des Objekts mit dem zweiten Messsystem durch die Korrelation mit dem ersten Messsystem eine vollständige absolute Erfassung der Dimensionsdaten, zum Beispiel Dimensionsänderungen erfolgen. Mit dem zweiten Messsystem aus zweitem Sender und Empfänger werden insbesondere nicht die direkten Strahlungsreflektionen an Grenzflächen des Objekts ausgewertet, sondern die durch das Objekt beim Durchstrahlen verursachte Verzögerung der Terahertzstrahlung. Mit dem ersten Messsystem werden dagegen insbesondere Reflektionen der Terahertzstrahlung an Grenzflächen des Objekts ausgewertet.

Messsysteme mit einer geringeren Bandbreite sind nicht nur kostengünstiger, sondern auch einfacher umsetzbar, einfacher auszuwerten und weisen in der Regel geringere Zulassungsanforderungen auf. Durch die erfindungsgemäße Kombination der Messsysteme wird insgesamt ein geringerer Aufwand ermöglicht, da eine umfangreiche Vermessung des Objekts, also ein umfangreiches Aussenden von Terahertzstrahlung auf das Objekt nur mit dem zweiten Messsystem erfolgen muss. Zum Beispiel bei einer Anordnung mehrerer Sender und Empfänger um das zu vermessende Objekt herum können die weniger aufwendigen schmalbandigen zweiten Sender und Empfänger in größerer Anzahl um das Objekt herum positioniert werden, unter Vermeidung des Aufwands, der mit einer größeren Anzahl breitbandigerer Sender und Empfänger verbunden wäre. Andersherum wird es bei gleicher Bandbreite ermöglicht, dünnere Objekte zu vermessen.

Grundsätzlich ist es möglich, dass von dem ersten Sender die Terahertzstrahlung nur zu einem Zeitpunkt auf einen Ort auf der Oberfläche des Objekts ausgesendet wird. Es ist aber auch möglich, dass auch der erste Sender Terahertzstrahlung zu mehreren Zeitpunkten bzw. auf mehrere Orte der Oberfläche des Objekts aussendet, so wie der zweite Sender. Beispielsweise ist es wie erläutert möglich, dass das Objekt während der Messung durch die Vorrichtung gefördert wird. In diesem Fall wird auch durch einen zum Beispiel feststehenden ersten Sender oder zweiten Sender zu mehreren Zeitpunkten auf das sich bewegende Objekt ausgesendete Terahertzstrahlung auf mehrere Orte auf der Oberfläche des Objekts ausgesendet. Bevorzugt wird von dem zweiten Sender Terahertzstrahlung zu mehr Zeitpunkten bzw. auf mehr Orte auf der Oberfläche des Objekts ausgesendet als Terahertzstrahlung durch den ersten Sender. Es ist insbesondere möglich, dass durch den zweiten Sender Terahertzstrahlung auf im Wesentlichen die gesamte Oberfläche des Objekts ausgesendet wird, zum Beispiel bei einem plattenförmigen Objekt quer zu einer Förderrichtung des Objekts bzw. bei einem strangförmigen Objekt über den gesamten Umfang des zum Beispiel entlang seiner Längsrichtung geförderten Objekts. Bei ausreichend schneller Bewegung des zweiten Senders quer zur Förderrichtung bzw. um das Objekt herum, oder bei Vorsehen einer ausreichenden Anzahl zweiter Sender und entsprechend zweiter Empfänger, ist auf diese Weise eine im Wesentlichen vollständige Abdeckung der Objektoberfläche und damit Vermessung des Objekts durch das zweite Messsystem möglich. Die im Vergleich selteneren Messungen durch das erste Messsystem sind dennoch ausreichend, um die durch das zweite Messsystem ermittelten Dimensionsänderungen in entsprechende Absolutwerte zu übertragen.

Wie erläutert, weist der erste Sender eine größere Bandbreite auf als der zweite Sender. Die Bandbreite der von dem ersten Sender ausgesendeten Terahertzstrahlung kann nach einer Ausgestaltung mehr als 20 % der Trägerfrequenz der Terahertzstrahlung betragen. Auch kann die Bandbreite der von dem ersten Sender ausgesendeten Terahertzstrahlung mehr als 10 GHz betragen, vorzugsweise mehr als 20 GHz. Auch kann die Bandbreite der von dem ersten Sender ausgesendeten Terahertzstrahlung größer sein als die Lichtgeschwindigkeit geteilt durch das Zweifache des Produkts aus dem Brechungsindex und der zu vermessenden Dimension, zum Beispiel einer Wanddicke. Mit einem solchen breitbandigen Sensor ist ein höherer Aufwand verbunden. Dafür ist ein solcher breitbandiger Sender in der Lage, auch geringe Abstände von Grenzflächen des Objekts zuverlässig aufzulösen und damit die absoluten Dimensionen, zum Beispiel die absolute Dicke des Objekts und den Brechungsindex zuverlässig zu ermitteln.

Nach einer weiteren Ausgestaltung kann die Bandbreite der von dem zweiten Sender ausgesendeten Terahertzstrahlung weniger als 3 %, vorzugsweise weniger als 2 % der Trägerfrequenz der Terahertzstrahlung betragen. Besonders bevorzugt ist es, wenn als Terahertzstrahlung des zweiten Senders Terahertzstrahlung innerhalb eines ISM-Bandes verwendet werden kann. ISM-Bänder (Industrial Scientific and Medical Bands) sind Frequenzbereiche, die in der Regel zulassungsfrei genutzt werden können. Hierdurch wird der Aufwand weiter verringert. Ein Beispiel für ein geeignetes ISM-Band ist ein Frequenzband im Bereich von 122 bis 123 GHz, also mit einer Bandbreite von 1 GHz. Insbesondere kann die Bandbreite des zweiten Senders kleiner, beispielsweise um einen Faktor 2 kleiner, sein als die doppelte Lichtgeschwindigkeit geteilt durch das Produkt aus dem Brechungsindex und der zu messenden Struktur, zum Beispiel Wanddicke.

Gemäß einer besonders praxisgemäßen Ausgestaltung können der erste Sender und der erste Empfänger durch einen ersten Transceiver ausgebildet sein und/oder der zweite Sender und der zweite Empfänger durch einen zweiten Transceiver ausgebildet sein. Die entsprechenden Sender und Empfänger sind also am selben Ort angeordnet bzw. integriert als Transceiver ausgebildet.

Nach einer weiteren Ausgestaltung kann vorgesehen sein, dass auf der dem ersten Sender gegenüberliegenden Seite des Objekts ein erster Reflektor für die von dem ersten Sender ausgesendete Terahertzstrahlung angeordnet ist und/oder dass auf der dem zweiten Sender gegenüberliegenden Seite des Objekts ein zweiter Reflektor für die von dem zweiten Sender ausgesendete Terahertzstrahlung angeordnet ist. Durch die Reflektoren wird die Terahertzstrahlung nach Durchstrahlen des Objekts reflektiert, so dass sie nach erneutem Durchstrahlen des Objekts von dem jeweiligen Empfänger empfangen wird, insbesondere dem in Form eines Transceivers gemeinsam mit dem jeweiligen Sender ausgebildeten Empfänger.

Der zweite Sender und der zweite Empfänger können während der Messung um das Objekt rotieren und/oder entlang des Objekts transversieren. Alternativ oder zusätzlich ist es auch möglich, dass mehrere um das Objekt oder entlang des Objekts angeordnete zweite Sender und zweite Empfänger vorgesehen sind. Wie bereits erläutert, ist das schmalbandige zweite Messsystem kostengünstig und von geringem Aufwand. Entsprechend kann dieses auch schnell rotiert bzw. in Bezug auf das Objekt transversiert werden bzw. es können relativ viele zweite Sender und zweite Empfänger vorgesehen werden. Somit kann eine besonders umfangreiche Abdeckung und damit Vermessung auch eines während der Messung durch die Vorrichtung bewegten Objekts erfolgen. Zum Beispiel wenn mehrere zweite Sender und zweite Empfänger vorgesehen sind, können diese feststehend angeordnet sein, wobei durch eine ausreichende Anzahl eine im Wesentlichen vollständige Abdeckung der Objektoberfläche für die Vermessung möglich ist. Es ist auch denkbar, dass mehrere zweite Sender und zweite Empfänger vorgesehen sind, die gleichzeitig rotieren oder transversieren, wie bereits erläutert. Eine lineare Bewegung, insbesondere ein Transversieren, kann insbesondere bei einem plattenförmigen Objekt entlang des Objekts erfolgen, nämlich in Längsrichtung bzw. einer Förderrichtung und/oder quer zur Längsrichtung bzw. Förderrichtung. Auch eine kombinierte Transversal- und Rotationsbewegung ist möglich, so dass zum Beispiel eine spiralförmige Bewegung um ein zum Beispiel strangförmiges Objekt erfolgt.

Grundsätzlich kann auch das erste Messsystem aus erstem Sender und erstem Empfänger in der oben erläuterten Weise in Bezug auf das Objekt bewegt werden. Auch wäre grundsätzlich das Vorsehen mehrerer erster Sender und erster Empfänger möglich. Die entsprechenden Ausgestaltungen können wie bei dem zweiten Sender und zweiten Empfänger sein, wie oben erläutert. Wie eingangs erläutert, ist insofern allerdings eine geringere Abdeckung der Objektoberfläche ausreichend.

Nach einer weiteren Ausgestaltung kann der zweite Sender Terahertzstrahlung unter einem schrägen Einfallswinkel, also insbesondere einem von einem normalen Strahlungseinfall abweichenden Einfallswinkel, auf die Oberfläche des Objekts aussenden. Grundsätzlich besteht ein Problem darin, dass bei dem Vermessen des Objekts mit Terahertzstrahlung mittels des zweiten Messsystems aus zweitem Sender und zweitem Empfänger zusätzliche Signale verursacht werden können, zum Beispiel durch Reflektionen vom Objekt. Solche zusätzlichen Signale können das Messergebnis, insbesondere die gemessene Verzögerung aufgrund des Durchstrahlens des Objekts, unerwünscht beeinflussen. Solche zusätzlichen Signale können grundsätzlich rechnerisch herausgefiltert werden, so dass nur das gesuchte Verzögerungssignal übrig bleibt. Hierzu ist eine gewisse Bandbreite der Terahertzstrahlung notwendig, die allerdings nicht durch die Dimensionen des Objekts definiert ist, insbesondere geringe Abstände zwischen Grenzflächen, sondern durch den Abstand der die zusätzlichen Signale verursachenden Störungen, zum Beispiel Grenzflächen, zu dem Messsystem, zum Beispiel einem Reflektor. Durch Wählen eines entsprechenden Abstands zum Beispiel eines Reflektors zum Objekt kann somit auch mit einer vergleichsweise kleinen Bandbreite trotz zusätzlicher Signale eine zuverlässige Messung erfolgen. Gemäß der vorgenannten Ausgestaltung werden unerwünschte Signale dagegen vermieden, indem durch eine Schrägstellung des Strahlengangs zu der bestrahlten Oberfläche des Objekts zusätzliche Signale durch Reflektionen an Grenzflächen des Objekts vermieden werden. Vom Messsystem direkt hervorgerufene Signale lassen sich herauskalibrieren. Indem das gemessene Signal von allen unerwünschten Komponenten befreit werden kann, ist keine weitere rechnerische Signalfilterung erforderlich. Es kann entsprechend mit einer minimalen Bandbreite bis hin zu einem monofrequenten continuous wave (CW) Betrieb gemessen werden. Gleichzeitig ist ein geringer Abstand des Messsystems, beispielsweise eines Reflektors, zum Objekt möglich, so dass der Bauraum der Vorrichtung verringert ist.

Wie bereits erläutert, kann die (absolute) Dimension des Objekts unter Berücksichtigung des Brechungsindex des Objekts bestimmt werden. Grundsätzlich kann für die Bestimmung der Absolutwerte der ermittelten Dimensionsänderungen der Brechungsindex für das Material des Objekts als bekannt angenommen werden. Es kommt allerdings in der Praxis abhängig vom Anwendungszweck zu teilweise unerkannten Veränderungen des Brechungsindex. Beispielsweise bei in Extrusionsvorrichtungen hergestellten Objekten kann dies durch eine unerkannte Veränderung der dem Extruder zugeführten Kunststoffmischung erfolgen. Die extrudierten Kunststoffe weisen in der Regel Additive auf, wobei die Anzahl der Additive und auch die Zusammensetzung der Additive schwanken kann. Hierdurch kann es zu Fehlern kommen, wenn der Brechungsindex als konstant bekannt angenommen wird.

Nach einer weiteren Ausgestaltung ist es daher möglich, dass aus der von dem ersten Empfänger empfangenen Terahertzstrahlung der Brechungsindex des Objekts bestimmt wird. Die Bestimmung des Brechungsindex kann grundsätzlich erfolgen wie zum Beispiel in der WO 2016/139155 A1 beschrieben. So kann aus einem Vergleich der Laufzeit der Terahertzstrahlung zwischen dem ersten Sender und dem ersten Empfänger ohne Objekt im Strahlengang mit der Laufzeit zwischen erstem Sender und erstem Empfänger mit Objekt im Strahlengang bei bekannter Wandstärke auf den Brechungsindex des Strangmaterials geschlossen werden. Es muss lediglich die Position des ersten Senders und ersten Empfängers bzw. eines gegebenenfalls vorhandenen Reflektors bekannt sein.

Nach einer weiteren Ausgestaltung ist es möglich, dass die Dimension, insbesondere die Dimensionsänderung des Objekts und/oder der Absolutwert der ermittelten Dimension oder Dimensionsänderung aus einer beim Durchstrahlen durch das Objekt verursachten Phasenveränderung der von dem ersten und/oder zweiten Sender ausgesendeten Terahertzstrahlung bestimmt wird. Durch eine Auswertung einer durch das Objekt verursachten Phasenveränderung der ausgesendeten Terahertzstrahlung ist die erfindungsgemäße Dimensionsbestimmung in besonders zuverlässiger und präziser Weise möglich. Um die Phase bzw. die Phasenveränderung eindeutig zu bestimmen, ist insbesondere bei Verwendung sehr schmalbandiger Terahertzstrahlung, bis zum CW Betrieb, eine Auswertung sowohl des I-Kanals als auch des Q-Kanals notwendig. Mittels dieses I- und Q-Verfahrens (In-Phase- und Quadrature-Verfahren) kann die Phaseninformation eines hochfrequenten Trägersignals zuverlässig bestimmt werden. Obgleich die Auswertung der Phasenveränderung eine genauere Messung ermöglicht, wäre es grundsätzlich auch denkbar, eine Frequenzmessung oder Amplitudenauswertung durchzuführen.

Nach einer weiteren Ausgestaltung kann anhand insbesondere schneller Signaländerungen des von dem zweiten Empfänger empfangenen Terahertzstrahlungssignals auf eine Fehlstelle des Objekts geschlossen werden. Als Fehlstellen werden insbesondere Materialänderungen des Objekts verstanden, die vergleichsweise klein sind, insbesondere kleiner oder etwa gleich der Wellenlänge der Terahertzstrahlung. Derartige Fehlstellen wirken als Mie-Streuer, die in grober Näherung in sämtliche Richtungen etwa gleich stark streuen. Dies bedeutet, dass das von diesen Fehlstellen zurück gestreute Signal klein ist gegenüber dem insgesamt gestreuten Signal. Typischerweise ist es schon bei 100 mm Abstand kleiner als 1 %. Es fällt proportional zu 1/r² ab, mit r=Abstand.

Bei kurzen Abständen und geringem Rauschen, das beispielsweise durch eine geringe Bandbreite der Terahertzstrahlung erreicht werden kann, kann das gestreute Signal direkt nachgewiesen und als Fehlstelle gedeutet werden. Der zum Beispiel in der oben genannten DE 10 2016 105 599 A1 vorgestellte Ansatz zur Fehlstellendetektion mittels Signalamplituden der direkten Reflektion einer Fehlstelle weist dagegen eine schwache Empfindlichkeit auf, insbesondere bei Anwesenheit reflektierender Oberflächen, wie es vorliegend durch den Reflektor vorgesehen sein kann. Der in der ebenfalls oben erläuterten DE 20 2021 100 416 U1 beschriebene Ansatz nutzt hingegen zusätzlich und im Wesentlichen Phasenänderungen der Terahertzstrahlung aus, wodurch die Empfindlichkeit der Messung erheblich verbessert wird.

Der oben genannten Ausgestaltung liegt der Gedanke zugrunde, dass vergleichsweise langsame Änderungen des Terahertzstrahlungssignals durch Dimensionsänderungen des Objekts verursacht werden, wohingegen im Vergleich zu Dimensionsänderungen kleinere Fehlstellen schnellere, im Sinne eines Beugungsmusters punktuelle Änderungen des Terahertzstrahlungssignals verursachen als die Dimensionsänderungen. Dadurch kann auf Grundlage des empfangenen Terahertzstrahlungssignals zwischen Dimensionsänderungen einerseits und Fehlstellen andererseits unterschieden werden. Aufgrund der regelmäßig kohärenten Terahertzstrahlungssignale kommt es zu Beugungseffekten an den Fehlstellen, so dass das gemessene Strahlungssignal auch beeinflusst wird, wenn sich die Fehlstelle in der Nähe der strahlenoptisch zu erwartenden Strahlungswege befindet. Zur Erkennung von Fehlstellen kann entsprechend ein solches Beugungsmuster ausgewertet werden, und zwar sowohl hinsichtlich der Amplitude als auch hinsichtlich der Phase.

Das durch eine Fehlstelle direkt gestreute Terahertzstrahlungssignal ändert sich in der Regel schnell über den Ort (bzw. über die Zeit durch Bewegung des Messobjektes oder des Senders bzw. Empfängers). Abhängig von der genauen Ausgestaltung weist dieses Terahertzstrahlungssignal typischerweise eine Oszillationslänge von wenigen Millimetern auf. Beispielsweise ist bei einer Terahertzstrahlungsfrequenz von 120 GHz und der Verwendung eines Senders und Empfängers mit einem schrägen Einfallswinkel von 20° eine Oszillationslänge von etwa 3,7 mm zu erwarten. Das Terahertzstrahlungssignal kann entsprechend zuverlässig von anderen Signaländerungen, die durch größere Dimensionsänderungen hervorgerufen werden, unterschieden werden, zum Beispiel durch eine lokale Frequenzanalyse oder Matchingfilter. Dies ist insbesondere der Fall, da die Oszillationslänge eines Fehlstellensignals unabhängig von der Fehlstelle und damit bekannt ist und somit bei bekannter Bewegungsgeschwindigkeit des Messobjektes oder des Senders bzw. Empfängers die Frequenz der von einer Fehlstelle hervorgerufenen Signaländerungen bekannt ist. Dies ist zum Beispiel bei einer Betrachtung der Amplituden des Terahertzstrahlungssignals nicht möglich, so dass eine Auswertung der Frequenz bzw. Phase des durch die Fehlstelle verursachten Signalmusters bevorzugt ist.

Das erfindungsgemäße Verfahren kann mit der erfindungsgemäßen Vorrichtung durchgeführt werden. Entsprechend kann die erfindungsgemäße Vorrichtung, insbesondere ihre Auswerteeinrichtung, zur Durchführung des erfindungsgemäßen Verfahrens ausgebildet sein.

Die Erfindung wird nachfolgend anhand von Ausführungsbeispielen näher erläutert.

Es zeigen schematisch:
- Figur 1: eine erfindungsgemäße Vorrichtung zur Durchführung des erfindungsgemäßen Verfahrens in einem ersten Anwendungsfall,
- Figur 2: die Vorrichtung aus Fig. 1 in einem zweiten Anwendungsfall, und
- Figur 3: Diagramme zur Veranschaulichung der erfindungsgemäßen Fehlstellenerkennung.

Soweit nichts anderes angegeben ist, bezeichnen in den Figuren gleiche Bezugszeichen gleiche Gegenstände.

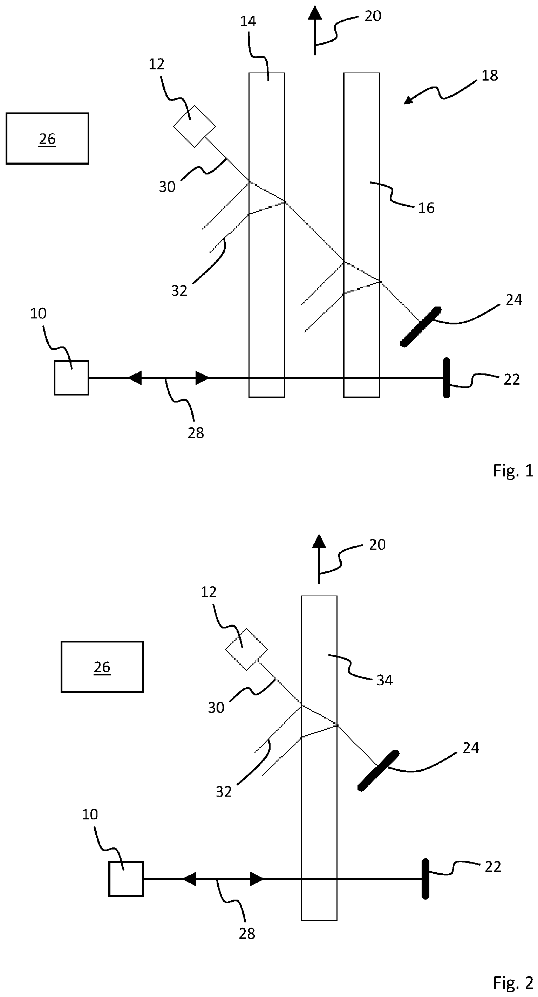

Die in Figur 1 gezeigte Vorrichtung weist einen ersten Transceiver 10, umfassend einen ersten Sender 10 für Terahertzstrahlung und einen ersten Empfänger 10 für die von dem ersten Sender 10 ausgesendete Terahertzstrahlung auf. Die Vorrichtung weist darüber hinaus einen zweiten Transceiver 12, umfassend einen zweiten Sender 12 für Terahertzstrahlung und einen zweiten Empfänger 12 zum Empfangen der von dem zweiten Sender 12 ausgesendeten Terahertzstrahlung auf. Der zweite Sender 12 sendet Terahertzstrahlung mit einer Bandbreite von weniger als 5 % der Trägerfrequenz der Terahertzstrahlung aus, die entsprechend von dem zweiten Empfänger 12 empfangen wird. Der erste Sender 10 sendet hingegen Terahertzstrahlung mit einer größeren Bandbreite aus, d.h. eine Terahertzstrahlung mit einer Bandbreite von mehr als 10 %, vorzugweise mehr 20 %, der Trägerfrequenz der Terahertzstrahlung, die entsprechend von dem ersten Empfänger 10 empfangen wird.

In Figur 1 sind sehr schematisch zwei gegenüberliegende Wandabschnitte 14, 16 eines zu vermessenden Rohrs 18 gezeigt, beispielsweise eines Kunststoffrohrs, insbesondere eines aus einer Extrusionsvorrichtung kommenden Kunststoffrohrs 18. Das Rohr 18 kann entlang seiner Längsachse durch die Vorrichtung gefördert werden, wie in Figur 1 durch den Pfeil 20 veranschaulicht. Es versteht sich, dass in Figur 1 nur ein kleiner Abschnitt des Rohrs 18 dargestellt ist. Dem ersten Transceiver 10 ist außerdem ein erster Reflektor 22 zugeordnet, der auf einer dem ersten Transceiver 10 gegenüberliegenden Seite des Rohrs 18 angeordnet ist. Dem zweiten Transceiver 12 ist entsprechend ein zweiter Reflektor 24 zugeordnet, der ebenfalls auf einer dem zweiten Transceiver 12 gegenüberliegenden Seite des Rohrs 18 angeordnet ist. Die Vorrichtung umfasst außerdem eine Auswerteeinrichtung 26, die mit den Transceivern 10, 12, insbesondere den Sendern 10, 12 und Empfängern 10, 12 der Transceiver 10, 12 verbunden ist, so dass diese durch die Auswerteeinrichtung 26 angesteuert werden können und Messdaten insbesondere der Empfänger 10, 12 zur Auswertung an die Auswerteeinrichtung weitergeleitet werden können. Hierzu sind die Transceiver 10, 12 mit der Auswerteeinrichtung 26 über geeignete Signal- und Steuerleitungen verbunden.

Zum Vermessen des Rohrs 18 wird von dem ersten Sender 10 Terahertzstrahlung auf das Rohr 18 ausgesendet, wobei die Terahertzstrahlung nach Durchstrahlen des Rohrs 18 von dem Reflektor 22 reflektiert wird, so dass sie nach erneutem Durchstrahlen des Rohrs 18 zurück zu dem ersten Transceiver 10 gelangt, wo sie durch den ersten Empfänger 10 als Messsignal empfangen wird. Dies ist in Figur 1 durch den Strahlengang 28 dargestellt. Die Terahertzstrahlung wird dabei an Grenzflächen des Rohrs 18 reflektiert. Die Messsignale des ersten Empfängers 10 werden an die Auswerteeinrichtung 26 weitergeleitet, die aus den an den Grenzflächen reflektierten Strahlungssignalen unter Berücksichtigung des Brechungsindex des Materials des Rohrs 18 absolute Dimensionsdaten des Rohrs 18, zum Beispiel die Wanddicken der Wandabschnitte 14, 16 bestimmt, zum Beispiel anhand von Laufzeitmessungen. Der Brechungsindex kann für das Rohr 18 als bekannt angenommen werden oder in der oben erläuterten Weise durch die Auswerteeinrichtung 26 bestimmt werden. Der erste Transceiver 10 kann feststehend angeordnet sein und in regelmäßigen Zeitabständen Terahertzstrahlung für eine Messung aussenden.

Während dieses Messvorgangs wird darüber hinaus durch den zweiten Sender 12 Terahertzstrahlung geringerer Bandbreite auf das Rohr 18 ausgesendet, wobei diese Terahertzstrahlung nach Durchstrahlen des Rohrs 18 von dem zweiten Reflektor 24 reflektiert wird und nach erneutem Durchstrahlen des Rohrs 18 erneut zu dem zweiten Transceiver 12 gelangt, wo sie durch den zweiten Empfänger 12 als Messsignal empfangen wird. Dies ist in Figur 1 durch den Strahlengang 30 veranschaulicht. Die Terahertzstrahlung wird dabei, wie in Figur 1 erkennbar, unter einem schrägen Einfallswinkel auf die Oberfläche des Rohrs 18 ausgesendet. Es kommt an den Grenzflächen des Rohrs zu einer Brechung der Terahertzstrahlung und zu Reflektionen, wie in Figur 1 zum Beispiel bei 32 dargestellt. Aufgrund des schrägen Einfallswinkels der Terahertzstrahlung gelangen diese Reflektionssignale jedoch nicht zurück zu dem zweiten Transceiver 12 und damit dem zweiten Empfänger 12. Es werden durch den zweiten Empfänger 12 also im Wesentlichen nur die das Rohr 18 durchstrahlenden Strahlungsanteile detektiert und gemessen. Die Messsignale werden wiederum an die Auswerteeinrichtung 26 übergeben, die anhand der durch das Rohr 18 verursachten Verzögerung der Terahertzstrahlung eine zeitliche und/oder räumliche Dimensionsänderung des Rohrs 18 ermittelt. Zur Ermittlung der Dimensionsänderungen wird insbesondere eine durch das Rohr 18 verursachte Phasenveränderung der Terahertzstrahlung ermittelt. Zur zeitlichen und/oder räumlichen Erfassung der Dimensionsänderungen wird die Terahertzstrahlung von dem zweiten Sender 12 zu mehreren Zeitpunkten und aufgrund der Förderung des Rohrs 18 in Längsrichtung auf mehrere Orte der Oberfläche des Rohrs 18 ausgesendet. Der zweite Transceiver 12 kann während der Messung um das Rohr 18 rotieren, um eine Messung über den Umfang des Rohrs 18 durchzuführen. Es wäre jedoch auch denkbar, mehrere zweite Transceiver 12 über den Umfang des Rohrs 18 verteilt anzuordnen.

Die Auswerteeinrichtung 26 korreliert die Messsignale des ersten und zweiten Empfängers 10, 12 und ermittelt daraus Absolutwerte der ermittelten Dimensionsänderungen des Rohrs 18. Bei den gemessenen Dimensionsdaten bzw. Dimensionsänderungen handelt es sich vorliegend um Dickendaten bzw. Dickenänderungen.

Figur 2 zeigt die Vorrichtung aus Figur 1 anhand des Vermessens eines plattenförmigen Objekts 34. Das plattenförmige Objekt 34 kann wiederum zum Beispiel entlang der Richtung 20 durch die Vorrichtung gefördert werden. Die Messung und Auswertung erfolgen in grundsätzlich gleicher Weise wie zu Figur 1 erläutert. Im Unterschied zu Figur 1 liefern die Messsignale in Figur 2 eindeutig Dimensionsdaten, insbesondere Dickendaten, des plattenförmigen Objekts 34, während in Figur 1 die ermittelten Dimensionsdaten, insbesondere Dickendaten, Gesamtdaten für beide Rohrwände 14, 16 sind. In Figur 2 wäre es beispielsweise denkbar, dass mehrere zweite Transceiver 12 quer zur Förderrichtung 20 nebeneinander angeordnet sind, in Figur 2 also in die Zeichenebene hinein, oder dass der zweite Transceiver 12 während der Messung in dieser Richtung transversiert wird. Auf diese Weise kann beispielsweise im Wesentlichen über die gesamte Breite des plattenförmigen Objekts 18, 34 eine Messung erfolgen.

In beiden in Figur 1 und Figur 2 gezeigten Anwendungsfällen ist weiterhin eine Detektion von Fehlstellen der vermessenen Objekte 18, 34 möglich, insbesondere indem anhand schneller Signaländerungen des von dem zweiten Empfänger 12 empfangenen Terahertzstrahlungssignals auf eine Fehlstelle des Objekts 18, 34 geschlossen wird.

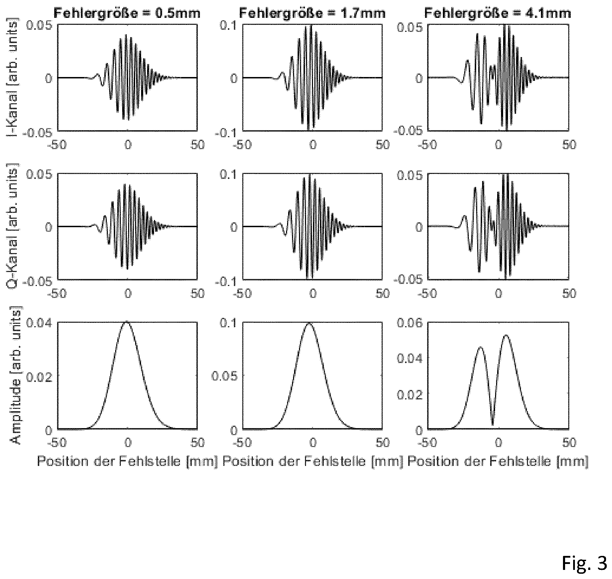

Dies soll anhand der Figur 3 näher erläutert werden. Dort sind für drei unterschiedliche Fehlstellengrößen (Fehlergrößen) entsprechende Messsignale des zweiten Empfängers 12 dargestellt, wobei auf der x-Achse jeweils die Position der Fehlstelle in Millimeter angegeben ist. Übereinander sind in Figur 3 dabei die Messsignale des I-Kanals, des Q-Kanals und der Amplitude in beliebigen Einheiten aufgetragen. Der zweite Sender 12 sendete Terahertzstrahlung mit einer Wellenlänge von 2,5 mm im CW Betrieb aus. Aus einem Vergleich der Diagramme wird deutlich, dass Messsignale, die durch Streuung an einer Fehlstelle hervorgerufen werden, eine charakteristische Signalform erzeugen, die insbesondere bei der Phasenauswertung nach dem I- und Q-Verfahren neben der Ausrichtung und dem Abstand auch Informationen über die Größe und Form der Fehlstelle liefern. Eine Betrachtung der reinen Amplitude, wie in Figur 3 ganz unten dargestellt, führt zu einer erheblich einfacheren Signalform, die jedoch insbesondere in Anwesenheit weiterer Störungen schlechter zu detektieren ist.

### Bezugszeichenliste

- 10: Transceiver, erster Sender, erster Empfänger
- 12: Transceiver, zweiter Sender, zweiter Empfänger
- 14: Rohrwand
- 16: Rohrwand
- 18: Rohr, Objekt
- 20: Förderrichtung
- 22: Erster Reflektor
- 24: Zweiter Reflektor
- 26: Auswerteeinrichtung
- 28: Strahlengang
- 30: Strahlengang
- 32: Strahlengang
- 34: Objekt

## Patentansprüche

1. Verfahren zum Bestimmen von Dimensionsdaten, insbesondere Dickendaten, eines plattenförmigen Objekts (34) oder eines strangförmigen Objekts (18), insbesondere eines Rohrs (18), umfassend die Schritte:
- von einem ersten Sender (10) wird Terahertzstrahlung zu mindestens einem Zeitpunkt auf mindestens einen Ort auf der Oberfläche des Objekts (18, 34) ausgesendet,
- die von dem ersten Sender (10) ausgesendete Terahertzstrahlung wird von einem ersten Empfänger (10) nach mindestens einmaligem Durchstrahlen des Objekts (18, 34) empfangen,
**gekennzeichnet durch** die weiteren Schritte:
- von einem zweiten Sender (12) wird Terahertzstrahlung mit einer Bandbreite von weniger als 5% der Trägerfrequenz der Terahertzstrahlung zu mehreren Zeitpunkten auf die Oberfläche des Objekts und/oder auf mehrere Orte auf der Oberfläche des Objekts (18, 34) ausgesendet, wobei die Bandbreite der von dem ersten Sender (10) ausgesendeten Terahertzstrahlung mehr als 10% der Trägerfrequenz der Terahertzstrahlung beträgt,
- die von dem zweiten Sender (12) ausgesendete Terahertzstrahlung wird von einem zweiten Empfänger (12) nach mindestens einmaligem Durchstrahlen des Objekts (18, 34) empfangen,
- aus der von dem zweiten Sender (12) empfangenen Terahertzstrahlung und/oder einer zeitlichen und/oder räumlichen Veränderung der von dem zweiten Empfänger (12) empfangenen Terahertzstrahlung wird unter Berücksichtigung der von dem ersten Empfänger (10) empfangenen Terahertzstrahlung eine Dimension des Objekts (18, 34) ermittelt.

2. Verfahren nach Anspruch 1, **dadurch gekennzeichnet, dass** die Bandbreite der von dem ersten Sender (10) ausgesendeten Terahertzstrahlung mehr als 20%, der Trägerfrequenz der Terahertzstrahlung beträgt und/oder dass die Bandbreite der von dem zweiten Sender (12) ausgesendeten Terahertzstrahlung weniger als 3%, vorzugsweise weniger als 2%, der Trägerfrequenz der Terahertzstrahlung beträgt.

3. Verfahren nach einem der vorhergehenden Ansprüche, **dadurch gekennzeichnet, dass** auf der dem ersten Sender (10) gegenüberliegenden Seite des Objekts (18, 34) ein erster Reflektor (22) für die von dem ersten Sender (10) ausgesendete Terahertzstrahlung angeordnet ist und/oder dass auf der dem zweiten Sender (12) gegenüberliegenden Seite des Objekts (18, 34) ein zweiter Reflektor (24) für die von dem zweiten Sender (12) ausgesendete Terahertzstrahlung angeordnet ist.

4. Verfahren nach einem der vorhergehenden Ansprüche, **dadurch gekennzeichnet, dass** der zweite Sender (12) und der zweite Empfänger (12) während der Messung um das Objekt (18, 34) rotiert und/oder entlang des Objekts (18, 34) transversiert werden und/oder dass mehrere um das Objekt (18, 34) oder entlang des Objekts (18, 34) angeordnete zweite Sender (12) und zweite Empfänger (12) vorgesehen sind.

5. Verfahren nach einem der vorhergehenden Ansprüche, **dadurch gekennzeichnet, dass** der zweite Sender (12) Terahertzstrahlung unter einem schrägen Einfallswinkel auf die Oberfläche des Objekts (18, 34) aussendet.

6. Verfahren nach einem der vorhergehenden Ansprüche, **dadurch gekennzeichnet, dass** die Dimension des Objekts (18, 34) unter Berücksichtigung des Brechungsindex des Objekts (18, 34) bestimmt wird, wobei vorzugsweise der Brechungsindex des Objekts (18, 34) aus der von dem ersten Empfänger (10) empfangenen Terahertzstrahlung bestimmt wird.

7. Verfahren nach einem der vorhergehenden Ansprüche, **dadurch gekennzeichnet, dass** die Bestimmung der Dimension des Objekts aus einer beim Durchstrahlen durch das Objekt (18, 34) verursachten Phasenveränderung der von dem ersten und/oder zweiten Sender (12) ausgesendeten Terahertzstrahlung bestimmt wird.

8. Verfahren nach einem der vorhergehenden Ansprüche, **dadurch gekennzeichnet, dass** anhand insbesondere schneller Signaländerungen des von dem zweiten Empfänger (12) empfangenen Terahertzstrahlungssignals auf eine Fehlstelle des Objekts (18, 34) geschlossen wird.

9. Vorrichtung zum Bestimmen von Dimensionsdaten eines platten- oder strangförmigen Objekts (18, 34), umfassend
- einen ersten Sender (10), ausgebildet zum Aussenden von Terahertzstrahlung zu mindestens einem Zeitpunkt auf mindestens einen Ort auf der Oberfläche des Objekts (18, 34),
- einen ersten Empfänger (10), ausgebildet zum Empfangen der von dem ersten Sender (10) ausgesendeten Terahertzstrahlung nach mindestens einmaligem Durchstrahlen des Objekts (18, 34),
- einen zweiten Sender (12), ausgebildet zum Aussenden von Terahertzstrahlung mit einer Bandbreite von weniger als 5% der Trägerfrequenz der Terahertzstrahlung zu mehreren Zeitpunkten auf die Oberfläche des Objekts und/oder auf mehrere Orte auf der Oberfläche des Objekts (18, 34), wobei die Bandbreite der von dem ersten Sender (10) ausgesendeten Terahertzstrahlung mehr als 10% der Trägerfrequenz der Terahertzstrahlung beträgt,
- einen zweiten Empfänger (12), ausgebildet zum Empfangen der von dem zweiten Sender (12) ausgesendeten Terahertzstrahlung nach mindestens einmaligem Durchstrahlen des Objekts (18, 34),
- eine Auswerteeinrichtung (26), ausgebildet zum Ermitteln einer Dimension des Objekts (18, 34) aus der von dem zweiten Sender (12) empfangenen Terahertzstrahlung und/oder einer zeitlichen und/oder räumlichen Veränderung der von dem zweiten Empfänger (12) empfangenen Terahertzstrahlung unter Berücksichtigung der von dem ersten Empfänger (10) empfangenen Terahertzstrahlung.

10. Vorrichtung nach Anspruch 9, **dadurch gekennzeichnet, dass** die Bandbreite der von dem ersten Sender (10) ausgesendeten Terahertzstrahlung mehr als 20%, der Trägerfrequenz der Terahertzstrahlung beträgt und/oder dass die Bandbreite der von dem zweiten Sender (12) ausgesendeten Terahertzstrahlung weniger als 3%, vorzugsweise weniger als 2%, der Trägerfrequenz der Terahertzstrahlung beträgt.

11. Vorrichtung nach einem der Ansprüche 9 oder 10, **dadurch gekennzeichnet, dass** auf der dem ersten Sender (10) gegenüberliegenden Seite des Objekts (18, 34) ein erster Reflektor (22) für die von dem ersten Sender (10) ausgesendete Terahertzstrahlung angeordnet ist und/oder dass auf der dem zweiten Sender (12) gegenüberliegenden Seite des Objekts (18, 34) ein zweiter Reflektor (24) für die von dem zweiten Sender (12) ausgesendete Terahertzstrahlung angeordnet ist.

12. Vorrichtung nach einem der Ansprüche 9 bis 11, **dadurch gekennzeichnet, dass** eine Rotations- und/oder Transversiereinrichtung vorgesehen ist zum Rotieren des zweiten Senders (12) und des zweiten Empfängers (12) während der Messung um das Objekt (18, 34) und/oder zum Transversieren des zweiten Senders (12) und des zweiten Empfängers (12) während der Messung entlang des Objekts (18, 34) und/oder dass mehrere um das Objekt (18, 34) oder entlang des Objekts (18, 34) angeordnete zweite Sender (12) und zweite Empfänger (12) vorgesehen sind.

13. Vorrichtung nach einem der Ansprüche 9 bis 12, **dadurch gekennzeichnet, dass** der zweite Sender (12) derart angeordnet ist, dass er Terahertzstrahlung unter einem schrägen Einfallswinkel auf die Oberfläche des Objekts (18, 34) aussendet.

14. Vorrichtung nach einem der Ansprüche 9 bis 13, **dadurch gekennzeichnet, dass** die die Auswerteeinrichtung (26) weiter dazu ausgebildet ist, die Dimension des Objekts (18, 34) unter Berücksichtigung des Brechungsindex des Objekts (18, 34) zu bestimmen, wobei vorzugsweise die Auswerteeinrichtung (26) weiter dazu ausgebildet ist, den Brechungsindex des Objekts (18, 34) aus der von dem ersten Empfänger (10) empfangenen Terahertzstrahlung zu bestimmen.

15. Vorrichtung nach einem der Ansprüche 9 bis 14, **dadurch gekennzeichnet, dass** die Auswerteeinrichtung (26) dazu ausgebildet ist, die Dimension des Objekts (18, 34) aus einer beim Durchstrahlen durch das Objekt (18, 34) verursachten Phasenveränderung der von dem ersten und/oder zweiten Sender (12) ausgesendeten Terahertzstrahlung zu bestimmen und/oder dass die Auswerteeinrichtung (26) dazu ausgebildet ist, anhand von insbesondere schnellen Signaländerungen des von dem zweiten Empfänger (12) empfangenen Terahertzstrahlungssignals auf eine Fehlstelle des Objekts (18, 34) zu schließen.

## Claims

1. Method for determining dimension data, in particular thickness data, of a plate-shaped object (34) or a strand-shaped object (18), in particular a pipe (18), comprising the steps:
- terahertz radiation is transmitted from a first transmitter (10) at at least one time to at least one location on the surface of the object (18, 34),
- the terahertz radiation transmitted from the first transmitter (10) is received by a first receiver (10) after at least once passing through the object (18, 34),
**characterized by** the further steps:
- terahertz radiation with a bandwidth of less than 5% of the carrier frequency of the terahertz radiation is transmitted from a second transmitter (12) at several times to the surface of the object and/or to several locations on the surface of the object (18, 34), wherein the bandwidth of the terahertz radiation transmitted by the first transmitter (10) is greater than 10% of the carrier frequency of the terahertz radiation,
- the terahertz radiation transmitted by the second transmitter (12) is received by a second receiver (12) after at least once passing through the object (18, 34),
- a dimension of the object (18, 34) is determined from the terahertz radiation received by the second transmitter (12) and/or a temporal and/or spatial change in the terahertz radiation received by the second receiver (12), taking into account the terahertz radiation received by the first receiver (10).

2. Method according to claim 1, **characterized in that** the bandwidth of the terahertz radiation transmitted by the first transmitter (10) is more than 20% of the carrier frequency of the terahertz radiation and/or that the bandwidth of the terahertz radiation transmitted by the second transmitter (12) is less than 3%, preferably less than 2%, of the carrier frequency of the terahertz radiation.

3. Method according to one of the preceding claims, **characterized in that** a first reflector (22) for the terahertz radiation transmitted by the first transmitter (10) is arranged on the side of the object (18, 34) opposite the first transmitter (10) and/or that a second reflector (24) for the terahertz radiation transmitted by the second transmitter (12) is arranged on the side of the object (18, 34) opposite the second transmitter (12).

4. Method according to one of the preceding claims, **characterized in that** the second transmitter (12) and the second receiver (12) are rotated around the object (18, 34) and/or transversed along the object (18, 34) during the measurement and/or that a plurality of second transmitters (12) and second receivers (12) arranged around the object (18, 34) or along the object (18, 34) are provided.

5. Method according to one of the preceding claims, **characterized in that** the second transmitter (12) emits terahertz radiation at an oblique angle of incidence onto the surface of the object (18, 34).

6. Method according to one of the preceding claims, **characterized in that** the dimension of the object (18, 34) is determined taking into account the refractive index of the object (18, 34), wherein the refractive index of the object (18, 34) is preferably determined from the terahertz radiation received by the first receiver (10).

7. Method according to one of the preceding claims, **characterized in that** the dimension of the object is determined from a phase change of the terahertz radiation transmitted by the first and/or second transmitter (12) caused by passing through the object (18, 34).

8. Method according to one of the preceding claims, **characterized in that** a defect in the object (18, 34) is inferred on the basis of, in particular, rapid signal changes in the terahertz radiation signal received by the second receiver (12).

9. Device for determining dimension data of a plate-shaped or strand-shaped object (18, 34), comprising
- a first transmitter (10) configured to emit terahertz radiation at at least one time to at least one location on the surface of the object (18, 34),
- a first receiver (10) configured to receive the terahertz radiation transmitted by the first transmitter (10) after at least once passing through the object (18, 34),
- a second transmitter (12) configured to emit terahertz radiation with a bandwidth of less than 5% of the carrier frequency of the terahertz radiation at several times to the surface of the object and/or to several locations on the surface of the object (18, 34), wherein the bandwidth of the terahertz radiation transmitted by the first transmitter (10) is more than 10% of the carrier frequency of the terahertz radiation,
- a second receiver (12) configured to receive the terahertz radiation transmitted by the second transmitter (12) after at least once passing through the object (18, 34),
- an evaluation device (26) configured to determine a dimension of the object (18, 34) from the terahertz radiation received by the second transmitter (12) and/or a temporal and/or spatial change in the terahertz radiation received by the second receiver (12), taking into account the terahertz radiation received by the first receiver (10).

10. Device according to claim 9, **characterized in that** the bandwidth of the terahertz radiation transmitted by the first transmitter (10) is more than 20% of the carrier frequency of the terahertz radiation and/or that the bandwidth of the terahertz radiation transmitted by the second transmitter (12) is less than 3%, preferably less than 2%, of the carrier frequency of the terahertz radiation.

11. Device according to one of claims 9 or 10, **characterized in that** a first reflector (22) for the terahertz radiation transmitted by the first transmitter (10) is arranged on the side of the object (18, 34) opposite the first transmitter (10) and/or that a second reflector (24) for the terahertz radiation transmitted by the second transmitter (12) is arranged on the side of the object (18, 34) opposite the second transmitter (12).

12. Device according to one of claims 9 to 11, **characterized in that** a rotation and/or transversing device is provided for rotating the second transmitter (12) and the second receiver (12) during the measurement about the object (18, 34) and/or for transversing the second transmitter (12) and the second receiver (12) during the measurement along the object (18, 34) and/or that a plurality of second transmitters (12) and second receivers (12) arranged about the object (18, 34) (18, 34) or along the object (18, 34) are provided.

13. Device according to one of claims 9 to 12, **characterized in that** the second transmitter (12) is arranged in such a way that it emits terahertz radiation at an oblique angle of incidence onto the surface of the object (18, 34).

14. Device according to one of claims 9 to 13, **characterized in that** the evaluation device (26) is further configured to determine the dimension of the object (18, 34) taking into account the refractive index of the object (18, 34), wherein the evaluation device (26) is preferably further configured to determine the refractive index of the object (18, 34) from the terahertz radiation received by the first receiver (10).

15. Device according to one of claims 9 to 14, **characterized in that** the evaluation device (26) is configured to determine the dimension of the object (18, 34) from a phase change of the terahertz radiation transmitted by the first and/or second transmitter (12) caused by passing through the object (18, 34) and/or that the evaluation device (26) is configured to infer a defect in the object (18, 34) on the basis of, in particular, rapid signal changes in the terahertz radiation signal received by the second receiver (12).

## Revendications

1. Procédé de détermination de données dimensionnelles, en particulier de données d'épaisseur d'un objet en forme de plaque (34) ou d'un objet en forme de toron (18), en particulier d'un conduit (18), comportant les étapes suivantes :
- un rayonnement térahertz est émis à partir d'un premier émetteur (10) à au moins un moment vers au moins un endroit sur la surface de l'objet (18, 34),
- le rayonnement térahertz émis par le premier émetteur (10) est reçu par un premier récepteur (10) après au moins une irradiation unique de l'objet (18, 34),
**caractérisé par** les étapes supplémentaires suivantes :
- un rayonnement térahertz présentant une largeur de bande inférieure à 5 % de la fréquence porteuse du rayonnement térahertz est émis par un deuxième émetteur (12) à plusieurs moments vers la surface de l'objet et/ou vers plusieurs endroits sur la surface de l'objet (18, 34), dans lequel la largeur de bande du rayonnement térahertz émis par le premier émetteur (10) mesure plus de 10 % de la fréquence porteuse du rayonnement térahertz,
- le rayonnement térahertz émis par le deuxième émetteur (12) est reçu par un deuxième récepteur (12) après au moins une irradiation unique de l'objet (18, 34),
- une dimension de l'objet (18, 34) est déterminée à partir du rayonnement térahertz reçu par le deuxième récepteur (12) et/ou d'une variation temporelle et/ou spatiale du rayonnement térahertz reçu par le deuxième récepteur (12), en tenant compte du rayonnement térahertz reçu par le premier récepteur (10).

2. Procédé selon la revendication 1, **caractérisé en ce que** la largeur de bande du rayonnement térahertz émis par le premier émetteur (10) mesure plus de 20 % de la fréquence porteuse du rayonnement térahertz et/ou **en ce que** la largeur de bande du rayonnement térahertz émis par le deuxième récepteur (12) mesure moins de 3 %, de préférence moins de 2 %, de la fréquence porteuse du rayonnement térahertz.

3. Procédé selon l'une des revendications précédentes, **caractérisé en ce qu'**un premier réflecteur (22) destiné au rayonnement térahertz émis par le premier émetteur (10) est disposé sur le côté de l'objet (18, 34) opposé au premier émetteur (10) et/ou **en ce qu'**un deuxième réflecteur (24) destiné au rayonnement térahertz émis par le deuxième émetteur (12) est disposé sur le côté de l'objet (18, 34) opposé au deuxième émetteur (12).

4. Procédé selon l'une des revendications précédentes, **caractérisé en ce que** pendant la mesure, le deuxième émetteur (12) et le deuxième récepteur (12) sont en rotation autour de l'objet (18, 34) et/ou sont déplacés transversalement le long de l'objet (18, 34) et/ou **en ce qu'**il est prévu plusieurs deuxièmes émetteurs (12) et deuxièmes récepteurs (12) disposés autour de l'objet (18, 34) ou le long de l'objet (18, 34).

5. Procédé selon l'une des revendications précédentes, **caractérisé en ce que** le deuxième émetteur (12) émet un rayonnement térahertz sous un angle d'incidence oblique vers la surface de l'objet (18, 34).

6. Procédé selon l'une des revendications précédentes, **caractérisé en ce que** la dimension de l'objet (18, 34) est déterminée en tenant compte de l'indice de réfraction de l'objet (18, 34), dans lequel l'indice de réfraction de l'objet (18, 34) est déterminé de préférence à partir du rayonnement térahertz reçu par le premier récepteur (10).

7. Procédé selon l'une des revendications précédentes, **caractérisé en ce que** la détermination de la dimension de l'objet est déterminée à partir d'une variation de phase du rayonnement térahertz émis par le premier et/ou le deuxième émetteur (12), causée pendant l'irradiation de l'objet (18, 34).

8. Procédé selon l'une des revendications précédentes, **caractérisé en ce qu'**un défaut de l'objet (18, 34) est constaté à l'aide de variations de signal, en particulier rapides, du signal de rayonnement térahertz reçu par le deuxième récepteur (12).

9. Dispositif de détermination de données dimensionnelles d'un objet (18, 34) en forme de plaque ou de toron, comportant
- un premier émetteur (10) conçu pour émettre un rayonnement térahertz à au moins un moment vers au moins un endroit sur la surface de l'objet (18, 34),
- un premier récepteur (10) conçu pour recevoir le rayonnement térahertz émis par le premier émetteur (10) après au moins une irradiation unique de l'objet (18, 34),
- un deuxième émetteur (12) conçu pour émettre un rayonnement térahertz présentant une largeur de bande inférieure à 5 % de la fréquence porteuse du rayonnement térahertz à plusieurs moments vers la surface de l'objet et/ou vers plusieurs endroits sur la surface de l'objet (18, 34), dans lequel la largeur de bande du rayonnement térahertz émis par le premier émetteur (10) mesure plus de 10 % de la fréquence porteuse du rayonnement térahertz,
- un deuxième récepteur (12) conçu pour recevoir le rayonnement térahertz émis par le deuxième émetteur (12) après au moins une irradiation unique de l'objet (18, 34),
- un moyen d'évaluation (26) conçu pour déterminer une dimension de l'objet (18, 34) à partir du rayonnement térahertz reçu par le deuxième récepteur (12) et/ou d'une variation temporelle et/ou spatiale du rayonnement térahertz reçu par le deuxième récepteur (12), en tenant compte du rayonnement térahertz reçu par le premier récepteur (10).

10. Dispositif selon la revendication 9, **caractérisé en ce que** la largeur de bande du rayonnement térahertz émis par le premier émetteur (10) mesure plus de 20 % de la fréquence porteuse du rayonnement térahertz et/ou **en ce que** la largeur de bande du rayonnement térahertz émis par le deuxième récepteur (12) mesure moins de 3 %, de préférence moins de 2 %, de la fréquence porteuse du rayonnement térahertz.

11. Dispositif selon l'une des revendications 9 ou 10, **caractérisé en ce qu'**un premier réflecteur (22) destiné au rayonnement térahertz émis par le premier émetteur (10) est disposé sur le côté de l'objet (18, 34) opposé au premier émetteur (10) et/ou **en ce qu'**un deuxième réflecteur (24) destiné au rayonnement térahertz émis par le deuxième émetteur (12) est disposé sur le côté de l'objet (18, 34) opposé au deuxième émetteur (12).

12. Dispositif selon l'une des revendications 9 à 11, **caractérisé en ce qu'**il est prévu un moyen de rotation et/ou de déplacement transversal pour la rotation du deuxième émetteur (12) et du deuxième récepteur (12) pendant la mesure autour de l'objet (18, 34) et/ou pour le déplacement transversal du deuxième émetteur (12) et du deuxième récepteur (12) pendant la mesure le long de l'objet (18, 34) et/ou **en ce qu'**il est prévu plusieurs deuxièmes émetteurs (12) et deuxièmes récepteurs (12) disposés autour de l'objet (18, 34) ou le long de l'objet (18, 34).

13. Dispositif selon l'une des revendications 9 à 12, **caractérisé en ce que** le deuxième émetteur (12) est disposé de manière à émettre un rayonnement térahertz sous un angle d'incidence oblique vers la surface de l'objet (18, 34).

14. Dispositif selon l'une des revendications 9 à 13, **caractérisé en ce que** le moyen d'évaluation (26) est en outre conçu pour déterminer la dimension de l'objet (18, 34) en tenant compte de l'indice de réfraction de l'objet (18, 34), dans lequel le moyen d'évaluation (26) est en outre conçu de préférence pour déterminer l'indice de réfraction de l'objet (18, 34) à partir du rayonnement térahertz reçu par le premier récepteur (10).

15. Dispositif selon l'une des revendications 9 à 14, **caractérisé en ce que** le moyen d'évaluation (26) est conçu pour déterminer la dimension de l'objet (18, 34) à partir d'une variation de phase du rayonnement térahertz émis par le premier et/ou le deuxième émetteur (12) causée pendant l'irradiation de l'objet (18, 34) et/ou **en ce que** le moyen d'évaluation (26) est conçu pour constater un défaut de l'objet (18, 34) à l'aide de variations de signal, en particulier rapides, du signal de rayonnement térahertz reçu par le deuxième récepteur (12).
